# EUROPEAN PATENT APPLICATION

(11) **EP 2 354 950 A1**
(43) Date of publication of application: **10.08.2011**
(21) Application number: 10197314.7
(22) Date of filing: 29.12.2010
(51) Int. Cl.: G06F 12/02

(54) **System, data structure, and method for processing multi-dimensional data**

(30) Priority: 31.12.2009 US 651110
(71) Applicant: Ceva D.S.P. Ltd., 46120 Herzlia Pituach (IL)
(72) Inventor: Eisenbach, Omri, 69411, Tel Aviv (IL); Sadeh Roni M., 44446, Kfar Saba (IL)
(74) Representative: Hutchinson, Glenn Stanley

(57) **Abstract**

A system, processor, data structure, and method are provided for processing multiple dimension data. A plurality of data elements stored in different dimensions in a sub-array of a first multiple dimension data array may be identified or determined to be correlated. The plurality of correlated data elements in different dimensions may be mapped to sequential positions in a single dimension of a second data array. In each computational cycle a plurality of data elements that are sequentially stored in the single dimension may be iteratively retrieved from the data array until at least all the correlated data elements are retrieved. The correlated data elements may be processed.

## Description

### BACKGROUND OF THE INVENTION

The present invention relates to video and image applications, and more particularly to a method of processing multiple dimensional data, for example, in video and imaging applications.

Video and imaging applications may process data from a computer memory. The video and imaging data may be stored in a multi-dimensional data array. Each data element in the multi-dimensional data array may have a value uniquely associated with a pixel in an image or video frame. The multi-dimensional data array may be divided into blocks or sub-arrays, each spanning multiple rows and columns in the multi-dimensional data array. The data elements in each sub-array may be related, correlated, or co-dependent such that all data elements therein may be processed together, as a group, according to conventional video processing mechanisms.

Processors may retrieve video or image data from the computer memory in bursts, bundles or groups of data elements. A burst may include multiple data elements which are sequentially ordered in a row of the multi-dimensional data array. For example, a burst of 8 or 16 data elements sequentially listed in a single row of the multi-dimensional data array may be retrieved in each fetch operation. Since data elements are sequentially retrieved, row by row, the burst or group of retrieved data elements (sequentially listed in a single row) often do not correspond to the group of correlated data elements (spanning multiple rows of a sub-array). Accordingly, to retrieve all the data in each sub-array to be processed together, a processor may cycle through multiple fetch operations for each row of the sub-array to properly process the correlated group of data.

Furthermore, when the burst size is greater than the number of data elements in the rows of the sub-arrays, the data retrieved in each burst may include sequentially data elements in the rows outside of the sub-array. The data elements outside of the sub-array are not correlated to the data elements inside of the sub-array and may be a waste of processor resources for processing the correlated data set.

### BRIEF DESCRIPTION OF THE DRAWINGS

Embodiments of the invention, however, both as to organization and method of operation, together with objects, features, and advantages thereof, may best be understood by reference to the following detailed description when read with the accompanying drawings. Specific embodiments of the present invention will be described with reference to the following drawings, wherein:

Fig. **1** is a schematic illustration of a system in accordance with embodiments of the invention;

Fig. **2** is a multiple dimensional data array for storing video and imaging data helpful in understanding embodiments of the invention;

Fig. **3** is a schematic illustration of a data structure for storing video and image data, in accordance with embodiments of the invention; and

Fig. **4** is a flowchart of a method in accordance with embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following description, various aspects of embodiments of the present invention will be described. For purposes of explanation, specific configurations and details are set forth in order to provide a thorough understanding thereof. However, it will also be apparent to one skilled in the art that the present invention may be practiced without the specific details presented herein. Furthermore, well known features may be omitted or simplified in order not to obscure the present invention.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

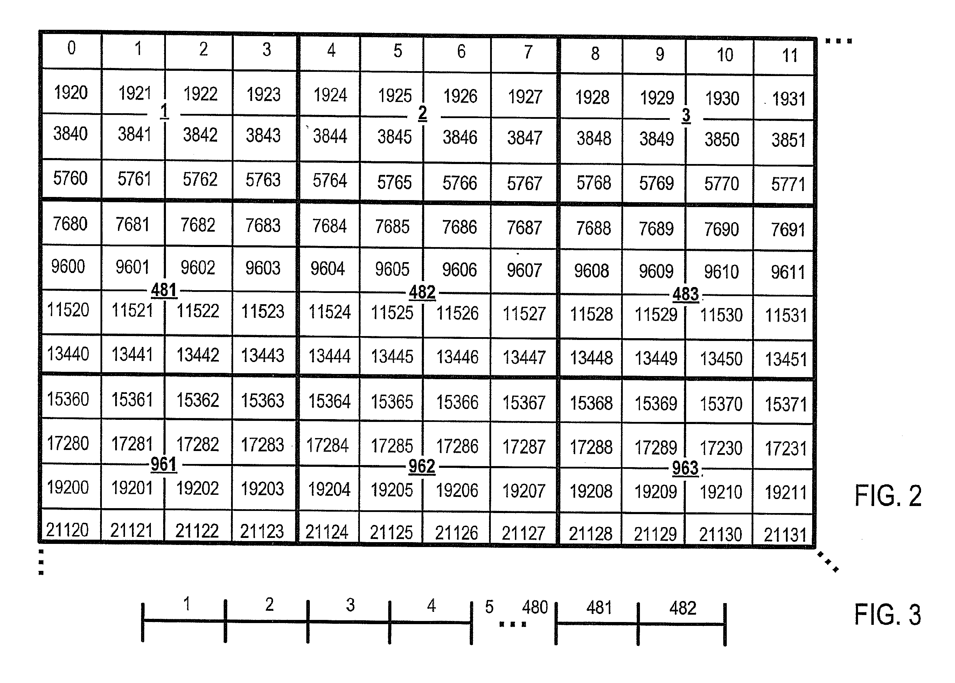

Embodiments of the present invention include a system, processor, and method of ordering or mapping data elements so that all correlated elements listed across multiple rows in a multi-dimensional sub-array (for example, as shown in Fig. **2**) are sequentially ordered in a single row of a one-dimensional data array (for example, as shown in Fig. **3**). Since a processor retrieves data elements from a computer memory in bursts or multiple sequentially listed elements in a single row, when using the one-dimensional or single row data array, all correlated elements from a single sub-array may be sequentially retrieved so that no intervening data elements from other sub-arrays are retrieved therebetween. For example, a mapping unit may re-order, map, or sequentially transform a plurality of data elements (e.g., 16) from a multi-dimensional sub-array (e.g., 4x4) of a multi-dimensional (e.g., 2D) data array to a segment of a one-dimensional row or data array (e.g., 1x16). A processor may sequentially retrieve the data elements listed in the one-dimensional row segment, for example, in one burst of 16 data elements or two bursts of 8 data elements each.

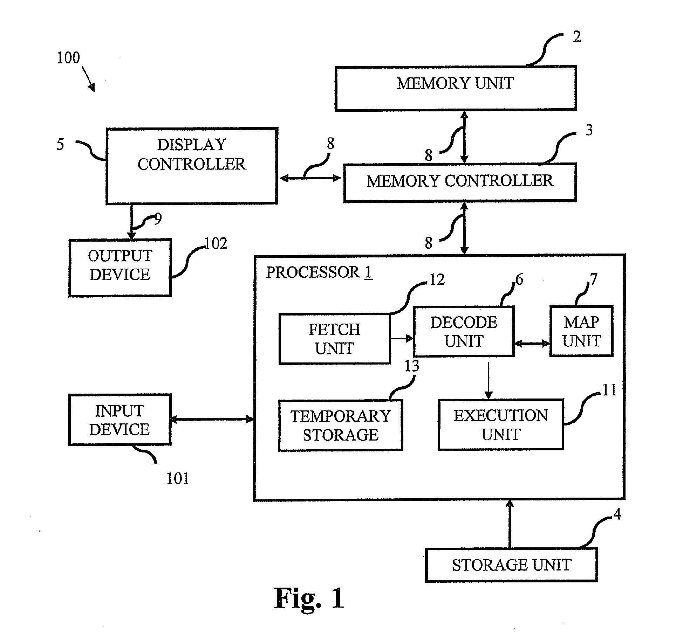

Reference is made to Fig. **1**, which is a schematic illustration of an exemplary device according to embodiments of the invention.

Device **100** may include a computer device, video or image capture or playback device, cellular device, or any other digital device such as a cellular telephone, personal digital assistant (PDA), video game console, etc. Device **100** may include any device capable of executing a series of instructions to record, save, store, process, edit, display, project, receive, transfer, or otherwise use or manipulate video or image data. Device **100** may include an input device **101**. When device **100** includes recording capabilities, input device **101** may include an imaging device such as a camcorder including an imager, one or more lens(es), prisms, or mirrors, etc. to capture images of physical objects via the reflection of light waves therefrom and/or an audio recording device including an audio recorder, a microphone, etc., to record the projection of sound waves thereto.

When device **100** includes image processing capabilities, input device **101** may include a pointing device, click-wheel or mouse, keys, touch screen, recorder/microphone using voice recognition, other input components for a user to control, modify, or select from video or image processing operations. Device **100** may include an output device **102** (for example, a monitor, projector, screen, printer, or display) for displaying video or image data on a user interface according to a sequence of instructions executed by processor **1.**

An exemplary device **100** may include a processor **1**. Processor **1** may include a central processing unit (CPU), a digital signal processor (DSP), a microprocessor, a controller, a chip, a microchip, a field-programmable gate array (FPGA), an application-specific integrated circuit (ASIC) or any other integrated circuit (IC), or any other suitable multi-purpose or specific processor or controller.

Device **100** may include a data memory unit **2** and a memory controller **3**. Memory controller **3** may control the transfer of data into and out of processor **1,** memory unit **2,** and output device **102**, for example via one or more data buses **8**. Device **100** may include a display controller **5** to control the transfer of data displayed on output device **102** for example via one or more data buses **9.**

Device **100** may include a storage unit **4.** Storage unit **4** may store video or image data in a compressed form, while data memory unit **2** may store video or image data in an non-compressed form; however, either compressed or non-compressed data may be stored in either memory unit and other arrangements for storing data in a memory or memories may be used. Each non-compressed data element may have a value uniquely associated with a single pixel in an image or video frame, while each compressed data element may represent a variation or change between the value(s) of a pixel in consecutive frames in a video stream or moving image. When used herein, unless stated otherwise, a data element generally refers to a non-compressed data element, for example, relating to a pixel value in a single image frame, and not a non-compressed data element, for example, relating to a change between values for a pixel in consecutive image frames. Non-compressed data may be represented in a multi-dimensional data array (for example, as in Fig. **2**) or in a one-dimensional data array (for example, as in Fig. **3**), while compressed data may be represented as a data stream or one-dimensional (1D) data array (not shown).

Data memory unit **2** may be a long-term or short-term memory unit, while storage unit **4** may be a long-term memory unit. Storage unit **4** may include one or more external drivers, such as, for example, a disk or tape drive or a memory in an external device such as the video, audio, and/or image recorder. Data memory unit **2** and storage unit **4** may include, for example, random access memory (RAM), dynamic RAM (DRAM), flash memory, cache memory, volatile memory, non-volatile memory or other suitable memory units or storage units. Data memory unit **2** and storage unit **4** may be implemented as separate (for example, "off-chip") or integrated (for example, "on-chip") memory units. In some embodiments in which there is a multi-level memory or a memory hierarchy, storage unit **4** may be off-chip and data memory unit **2** may be on-chip. For example, data memory unit **2** may include an L-1 cache or an L-2 cache. An L-1 cache may be relatively more integrated with processor **1** than an L-2 cache and may run at the processor clock rate whereas an L-2 cache may be relatively less integrated with processor **1** than the L-1 cache and may run at a different rate than the processor clock rate. In one embodiment, processor **1** may use a direct memory access (DMA) unit to read, write, and/or transfer data to and from memory units, such as data memory unit **2** and/or storage unit **4.** Other or additional memory architectures may be used.

Processor **1** may include a fetch unit **12**, a decode unit **6**, and an execution unit **11**. Processor **1** may request, retrieve, and process data from data memory unit 2 and/or storage unit **4** and may control, in general, the pipeline flow of operations executed on the data. Fetch unit **12** may retrieve or fetch bursts or sequential data elements in a single row of the data structures in data memory unit **2** in each fetch operation or computational cycle. Alternatively, fetch unit **12** may retrieve sequential data elements in a single column (or diagonally across or in another pre-determined pattern) of the data structures in data memory unit **2** in each fetch operation. Fetch unit **12** may order the fetched data in a local queue prior to dispatching, decoding or executing the instructions. Processor **1** may immediately process, decode and/or execute the fetched data or alternatively, may store the fetched data in a temporary storage unit **13**, such as, for example, a buffer or cache, until all data elements correlated therewith are fetched from data memory unit **2.**

Once a complete set of correlated data elements are fetched and dispatched by processor **1**, decode unit 6 may decode the data and then execution unit **11** may execute the data. Processor **1** may execute, for example, the following exemplary sequential pipeline stages for each instruction.

Stage (a): memory address (operated by processor **1** and memory controller **3**).

Stage (b): data memory fetch (operated by fetch unit **12**).

Stage (c): instruction dispatch (operated by processor **1**).

Stage (d): instruction decode (operated by decode unit **6**).

Stage (e): execute, data memory access, and data write-back (operated by execution unit **11**, processor **1,** and memory controller **3**).
It should be understood to a person skilled in the art, however, that embodiments of the invention are not limited to any specific sequence and other or additional pipeline stages and operating device components may be used.

When processing multi-dimensional video or image data, each data element in one of the multiple dimensions may be correlated or processed together with data elements in the other of the multiple dimensions. When a correlated data set is defined by multiple dimensions, all coordinates of the multiple dimensions are processed together as a group, according to any suitable video processing mechanisms, to generate complete or accurate data. Just as a point location in Cartesian space (xyz) may be defined by values in (x), (y), and (z) together and not just (x) alone, a piece of multi-dimensional video or image data may be defined by all correlated multi-dimensional data elements.

Multi-dimensional video or image data may be stored in multi-dimensional data structures. The multi-dimensional data structures may include a plurality of multi-dimensional sub-arrays each of which uniquely corresponds to a distinct set of correlated data elements or the pixels associated therewith. The correlated data elements in each sub-array may span multiple rows and columns of the multi-dimensional data sub-array.

Device **100** may include a mapping unit **7** for re-ordering, mapping, or transforming data elements stored in data memory unit **2** from a multi-dimensional data array (for example, as shown in Fig. **2**) to a one-dimensional data structure (for example, as shown in Fig. **3**). Mapping unit **7** may move data elements in data memory unit **2** from one location or address in the memory to another or, alternatively, may re-order or transform addresses or pointers to the data elements, for example, without actually moving or re-positioning the data elements themselves. In some embodiments, re-ordering, mapping, or transforming data elements may be executed in the decode stage of processing each data element or alternatively, in another processing stage or in a separate mapping stage in addition to the aforementioned stages of data processing. Mapping unit **7** may be implemented as a control module or application, separate or integral to processor **1.**

Reference is made to Fig. **2**, which schematically represents a two dimensional (2D) data array for storing video and imaging data helpful in understanding embodiments of the invention. The two dimensional (2D) data array may include blocks or sub-arrays, for example, four-by-four (4x4) data element sub-arrays, each including a distinct set of correlated data elements. For example, all correlated data elements in each (4x4) sub-array may be retrieved from memory and may be processed together, for example, in sequential pipeline slots.

To retrieve the correlated data, a processor may execute multiple fetch operation cycles to separately fetch data elements in each of the multiple rows of the sub-array. For example, the processor may retrieve data elements from each of the (4) rows of each (4x4) sub-array in Fig. **2**, one row at a time, in different respective burst or fetch cycles. Accordingly, to retrieve all of the (16) correlated data elements in the (4) rows of the (4x4) sub-array, the processor would access the data memory in (4) separate bursts or computational cycles.

Since only the first (4) sequential data elements in each row are correlated, increasing the number of data elements in each burst, for example, to be greater than (4) such as 8 or 16, will cause such a processor to retrieve data elements further along in each row (for example, outside the sub-array) which are not correlated with the first (4) data elements (for example, inside the sub-array). Accordingly, when using a conventional processor, increasing the burst size will not affect the number of fetch cycles needed to retrieve the correlated data elements, which in this example, will be the same (e.g., 4) regardless of the number of data elements retrieved in each burst.

Reference is made to Fig. **3**, which schematically illustrates a data structure for storing video and image data, according to some embodiments of the invention. In Fig. **3**, the data structure may list all correlated data elements (for example, associated with the same sub-array in Fig. **2**) sequentially in a single dimension or row.

In contrast with the mechanism shown in reference to Fig. **2**, in Fig. **3** according to embodiments of the invention, correlated data elements are stored in data memory unit **2** as the one-dimensional data structure. In the embodiments shown in Fig. **3**, each set of (16) correlated data elements is arranged in a one dimensional (1x16) data array or row. Since processor **1** retrieves data elements in each fetch cycle in a burst of data elements sequentially stored in a single row, to retrieve all of the (16) correlated data elements from the (1x16) row, processor **1** may access the data memory in (1) or (2) bursts or fetch cycles when a burst includes (16) or (8) data elements, respectively. Accordingly, while the arrangement illustrated by Fig, **2** may require the use of (4) separate bursts or fetch cycles to retrieve a set of (16) correlated data elements from memory, embodiments of the invention may only use (1) or (2) bursts or fetch cycles, providing a significant advantage in computational time and efficiency.

In the example described above in reference to Fig. **2**, a processor may retrieve data in 4 separate bursts or fetch cycles from a 2D data array. For example, for an 8 element burst in reference to Fig. **2**: burst 1 may include elements 0-7 of row 1, burst 2 may include elements 1920-1927 of row 2, burst 3 may include elements 3840-3847 of row 3, and burst 4 may include elements 5760-5766 of row 4. Only half of the data elements retrieved by the processor are correlated. According to embodiments of the invention, processor **1** retrieves data in (2) or (1) bursts or fetch cycles for an 8 or a 16 element burst, respectively.

In reference to Fig. **3**, using 8 element bursts, burst 1 may include elements 0, 1, 2, 3, 1920, 1921, 1922, and 1923 and burst 2 may include elements 3840, 3841, 3842, 3843, 5760, 5761, 5762, and 5763 of the single row or one-dimensional array. In reference to Fig. **3**, a single 16-element burst may include elements 0, 1, 2, 3, 1920, 1921, 1922, 1923, 3840, 3841, 3842, 3843, 5760, 5761, 5762, and 5763 of the single row or one-dimensional array. According to embodiments of the invention, all of the data elements retrieved by processor **1** in the (1) or (2) bursts are correlated.

It may be appreciated that although, on average, processors using the arrangement of Fig. **2** may retrieve the same total number of data elements as processors operating according to embodiments of the invention using for example the arrangement of Fig. **3**, in each fetch cycle, these processors may retrieve both correlated and un-correlated data elements, while processors operating according to embodiments of the invention retrieve only correlated data elements. Therefore, embodiments of the invention use fewer consecutive bursts and fetch cycles to retrieve a complete set of correlated data. For example, after 4 bursts each having 8 elements, in both methods, 2 sets of correlated data are retrieved. However, each individual set of correlated data takes 4 clock cycles to retrieve in the conventional method and only 1 or 2 clock cycles to retrieve according to embodiments of the invention. Since each data element may be only processed together with and after all the data elements correlated thereto are retrieved, systems operating according to embodiments of the invention may process data using (e.g., 2 or 4 times) fewer fetch cycles and with less latency than conventional systems.

In some embodiments, data elements are initially stored in data memory unit **2** as the one-dimensional data structure of Fig. **3**. In other embodiments, data elements are initially stored in data memory unit **2** as a multi-dimensional data array (for example, as shown in Fig. **2**) and a mapping unit (for example, mapping unit **7** of Fig. **1**) may re-order, map, transform, sequence, spread-out or otherwise rearrange the data elements into a one-dimensional data structure (for example, as shown in Fig. **3**). For example, data elements may be transformed during the decoding stage of processing each data element.

In one example, data elements which are sequentially listed in each row, one row at a time, in order of the sequence of rows listed in a multi-dimensional data array may be transformed or mapped (e.g., by mapping unit **7** of Fig. **1**) to a linear sequence in a single row of a one-dimensional array. That is, rows of data elements that are "stacked" vertically in a multi-dimensional sub-array or grid may be spread out or lined up side-by-side as a string of elements in a single row of a one-dimensional array. In general, in an (NxM) sub-array, correlated data elements, aᵢⱼ, 1 ≤ i ≤ M, 1 ≤ j ≤ N, may be arranged in a row in sequential order, for example, as a₁₁.... a_{1N}, a₂₁, ..., a_{2N}, ..., a₃₁, ..., a_{3N}, ..., a_{M1}, ..., a_{MN}. In another embodiment, correlated data elements (for example, from the same multi-dimensional sub-array) may be arranged in any order in a one-dimensional sub-array as long as there are no non-correlated data elements (for example, from a different sub-array) between any two correlated data elements.

It may be appreciated that although bursts are described as sequential entries arranged in a single row, busts may alternatively be sequential entries in a single column, across multiple rows. In such an embodiment, data elements which are sequentially listed in each column, one column at a time, in order of the sequence of column listed in a multi-dimensional data array may be mapped to a linear sequence in a single row or column of a one-dimensional array. Accordingly, correlated data elements may be retrieved in each burst with no non-correlated data elements positioned between any two correlated data elements.

It may be appreciated that although embodiments of the invention are described in reference to a 2D data array having 4x4 sub-arrays, any dimension of sub-arrays may be used, for example, 4x8, 8x4, 8x8, 4x16, 16x16, etc. Furthermore, it may be appreciated that higher dimensional, for example, three-dimensional (3D) data arrays may be used, which may be represented by a 3D matrix or tensor data structure. In one example, LUMA data elements may be represented in a 2D data array, while Chroma data elements are represented in a 2D or 3D data array.

For a 3D data array divided into 4x4x4 sub-arrays of (64) correlated data elements, a mapping unit (for example, mapping unit 7 of Fig. 1) may use a first transformation to map each a 3D sub-array to 4 sequential 2D 4x4 sub-arrays and a second transformation to map each 2D 4x4 sub-array to a 1D 1x16 sub-array, for example, as described above in reference to Figs. **2** and **3**. Accordingly, each 4x4x4 sub-array may be listed as a 1x64 row of sequential data elements in a one-dimensional data array. To retrieve the 64 data elements in the 1x64 row segment, processor **1** may access data memory unit **2** in **4** or 8 bursts or fetch cycles when a burst includes 16 or 8 data elements, respectively.

In contrast, a conventional non-efficient processor may retrieve data elements from the 4x4x4 sub-array (not from a 1x64 row) where the data elements are retrieved from a single row of a single 4x4 array in each fetch cycle. Such a processor would use 16 fetch cycles to access 16 different rows in order to retrieve the 64 elements, which is a significant increase in computational cycles compared with the 4 or 8 cycles used to retrieve the same data in accordance with embodiments of the invention.

Other or different dimensions, rows, columns, arrays or sub-arrays, numbers of correlated elements or numbers of elements in a sub-array, burst size and fetch or clock cycles may be used.

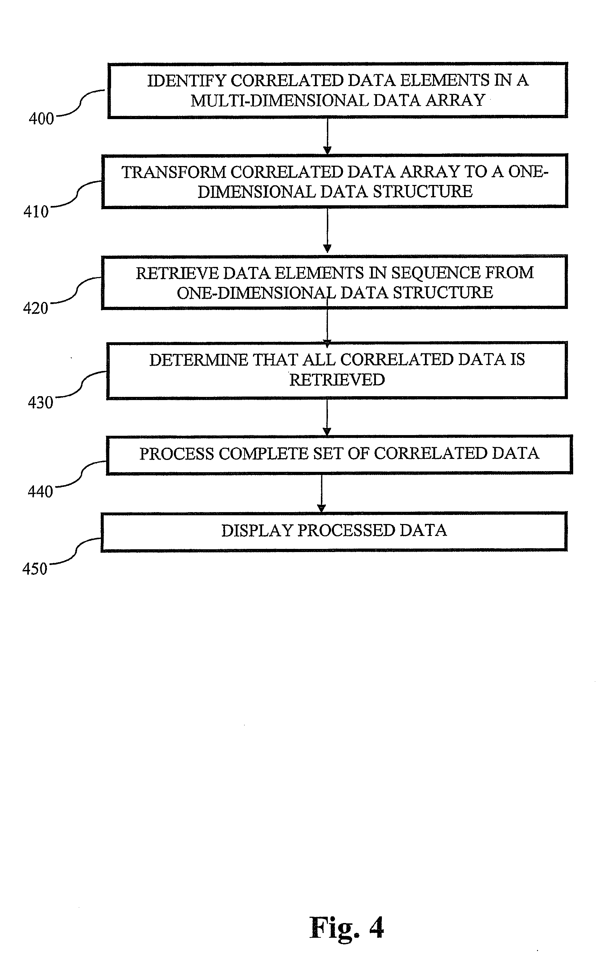

Reference is made to Fig. **4**, which is a flowchart of a method according to embodiments of the invention. In operation **400**, a processor (for example, processor **1** of Fig. **1**) may identify a set or a plurality of correlated data elements. For example, a pre-designated number of correlated data elements may be stored in sub-arrays with pre-designated dimensions in a data memory unit (for example, data memory unit **2**). For example, each 4x4 dimensioned sub-array may be pre-designated to include a distinct set of correlated data elements (for example, as described in reference to Fig. **2**). In another example, the processor may read a register file from memory, which indicates the correlated data elements, for example, by memory address. The correlated data elements may be processed together and may not be processed if less than all the correlated data elements are retrieved from memory.

In operation **410**, a mapping unit may transform the set of correlated data elements in each multi-dimensional data array (for example, as shown in Fig. **2**) to a one-dimensional data structure (for example, as shown in Fig. **3**). In some embodiments, the mapping unit may map sequential data elements from each sub-array to sequential positions in the one-dimensional data structure. Sequential data elements in a sub-array may be data elements in order of the sequence in which the elements are listed in each row, one row at a time, in order of the sequence of rows. In reference to the example shown in Fig. **2**, sequential data elements in the first sub-array (labeled "1") may be elements 0, 1, 2, 3, 1920, 1921, 1922, 1923, 3840, 3841, 3842, 3843, 5760, 5761, 5762, and 5763, which when transformed are sequentially listed in a single row.

In operation **420**, the processor may retrieve data elements from the data memory unit, for example, using a fetch unit (for example, fetch unit **12** of Fig. **1**). During each fetch or retrieve cycle, the processor may retrieve a data "burst" or a plurality of sequentially listed data elements in a row of the transformed data structure of operation **410**. Since data elements which are identified to be correlated in operation **400** are sequentially listed in the transformed data structure of operation **410,** each data burst retrieved may include only correlated data. Depending on the size of the data burst, i.e., the number of sequential data elements retrieved in a single fetch cycle, one or more consecutive fetch cycles may be used to retrieve the correlated data. In some embodiments, in a single processor pipeline only correlated data transformed from a single sub-array may be retrieved until all such correlated data is retrieved, with no un-correlated data intermediately retrieved.

In operation **430**, the processor may determine that all correlated data transformed from a single sub-array has been retrieved. Accordingly, the data set of correlated data is complete and may be properly processed. In operation **440,** the processor may process, for example, execute instructions on, the complete correlated data set of operation **430**. In operation **450**, a display (for example, output device **102** of Fig. **1**) may display the correlated data processed in operation **440.** Other operations or series of operations may be used.

It should be appreciated by a person skilled in the art that although embodiments of the invention are described in reference to video or image data that any data having the same or similar digital structure but pertaining to different data types may be used. A similar digital structure may include data having sets of correlated or co-dependent values, sets that mutually or in combination describe the same data, or sets of individual dimension components of multi-dimensional data.

It should be appreciated by a person skilled in the art that although embodiments of the invention describing a mapping unit (e.g., mapping unit 7 of Fig. **1**) for arranging, ordering or transforming data elements in a memory or storage device by moving data elements from one location or address in the memory to another, in other embodiments of the invention the mapping unit may equivalently order or transform addresses or pointers to the memory or storage device, for example, without actually moving or re-positioning the data elements themselves. In some embodiments, processor **1** of Fig. **1** may fetch data elements from a multi-dimensional data array (for example, as shown in Fig. **2**) in a new order. For example, instead of systems that retrieve data elements in each cycle in sequence from a single row of a multi-dimensional data array, embodiments of the invention may retrieve data elements in each cycle from the multiple rows of each sub-array, one row at a time, in the order in which the data elements are listed in each row. In this embodiment, processor **1** of Fig. **1** may retrieve only correlated data elements with no non-correlated elements therebetween, while maintaining the original order or positioning of the data elements.

Embodiments of the invention may include an article such as a computer or processor readable medium, or a computer or processor storage medium, such as for example a memory, a disk drive, or a USB flash memory, encoding, including or storing instructions which when executed by a processor or controller (for example, processor **1** of Fig. **1**), carry out methods disclosed herein; as well as any such instructions.

Although the particular embodiments shown and described above will prove to be useful for the many distribution systems to which the present invention pertains, further modifications of the present invention will occur to persons skilled in the art. All such modifications are deemed to be within the scope and spirit of the present invention as defined by the appended claims.

## Claims

1. A method for processing multiple dimension data, the method comprising:
identifying a plurality of correlated data elements stored in different dimensions in a sub-array of a multiple dimension first data array in a computer memory;
mapping the plurality of correlated data elements from the first data array to sequential positions in a single dimension of a second data array in the computer memory;
iteratively retrieving a plurality of data elements in each computational cycle which are sequentially stored in the single dimension of the second data array until at least all the correlated data elements are retrieved; and
processing the correlated data elements.

2. The method of claim 1, wherein all the correlated data elements are processed together.

3. The method of either of claims 1 and 2, wherein each of the retrieved data elements is not processed if less than all the data elements correlated thereto are retrieved from the computer memory.

4. The method of any preceding claim, wherein the data elements stored in the sub-array of the first data array are mapped to the single dimension of the second data array in the order in which they are sequentially listed in each row of the sub-array, one row at a time, in order of the sequence of rows in the sub-array.

5. The method of any preceding claim, wherein a data element mapped from a first sub-array of the first data array is not correlated with and is not positioned in the single dimension of the second data array between any two correlated data elements mapped from a second different sub-array of the first data array.

6. The method of any preceding claim, wherein the rows of data elements that are vertically stacked in the sub-array of the first data array are lined up side-by-side in the single dimension of the second data array.

7. The method of any preceding claim, wherein the multiple dimension data is video or image data.

8. The method of claim 7, wherein each data element in both the multiple dimensional first data array and the single dimensional second data array corresponds to a distinct pixel in a video frame or image.

9. A system for processing multiple dimension data, the system comprising:
a computer memory for storing a plurality of correlated data elements in different dimensions in a sub-array of a multiple dimension first data array;
a mapping unit to map the plurality of correlated data elements from the first data array to sequential positions in a single dimension of a second data array in the computer memory; and
a processor to iteratively retrieve a plurality of data elements in each computational cycle which are sequentially stored in the single dimension of the second data array until at least all the correlated data elements are retrieved and to process the correlated data elements.

10. The system of claim 9, wherein the processor processes all the correlated data elements together.

11. The system of either of claims 9 and 10, wherein the processor does not process each of the retrieved data elements if less than all the data elements correlated thereto are retrieved from the computer memory.

12. The system of any of claims 9 to 11, wherein the mapping unit maps the data elements stored in the sub-array of the first data array to the single dimension of the second data array in the order in which the data elements are sequentially listed in each row of the sub-array, one row at a time, in order of the sequence of rows in the sub-array.

13. The system of any of claims 9 to 12, wherein a data element stored in a first sub-array is not correlated with data elements stored in a second different sub-array of the first data array and the mapping unit does not map the data element from the first sub-array between any two correlated data elements mapped from the second sub-array into the single dimension of the second data array.

14. The system of any of claims 9 to 13, wherein, in the single dimension of the second data array, the mapping unit lines up rows of data elements side-by-side that are vertically stacked in the sub-array of the first data array.

15. The system of any of claims 9 to 14, wherein the multiple dimension data is video or image data.
